# EUROPEAN PATENT SPECIFICATION

(11) **EP 1 220 246 B1**
(45) Date of publication and mention of the grant of the patent: **23.11.2005**
(21) Application number: 00128609.5
(22) Date of filing: 28.12.2000
(51) Int. Cl.: H01G 4/30, H01G 4/232

(54) **Multilayer ceramic capacitor for three-dimensional mounting**
Vielschicht-Keramikkondensator für dreidimensionale Montage
Condensateur céramique multicouche pour montage tridimensionel

(43) Date of publication of application: 03.07.2002
(60) Divisional application: 05017872.2
(73) Proprietor: TDK Corporation, Chuo-ku, Tokyo 103-8272 (JP)
(72) Inventor: Ahiko, Taisuke, TDK-MCC Corporation, Yuri-gun, Akita-ken 018-0402 (JP); Togashi, Masaaki, TDK Corporation, Tokyo 103-8272 (JP)
(74) Representative: Vossius & Partner

(56) References cited:
- EP-A- 0 351 343
- GB-A- 2 157 890
- PATENT ABSTRACTS OF JAPAN vol. 1997, no. 10, 31 October 1997 (1997-10-31) & JP 09 148174 A (ROHM CO LTD), 6 June 1997 (1997-06-06)

## Description

The present invention relates to a multilayer ceramic capacitor for three-dimensional mounting suitable for mounting in a personal computer or other electronic apparatus with a high operating frequency as a low equivalent serial inductance (ESL) and low equivalent serial resistance (ESR) capacitor and suitable for mounting on a three-dimensional multilayer printed circuit board.

In the past, as multiterminal multilayer ceramic capacitors, for example the capacitor disclosed in U.S. Patent No. 5880925 is known. This capacitor has a capacitor body which has two types of, that is, first and second, internal electrodes and dielectric layers stacked to sandwich them. Each of these internal electrodes is formed with a rectangular main portion pattern extending in the longitudinal direction on a face of a rectangular ceramic layer and a plurality of lead patterns extending from the sides of the main portion to the sides of the ceramic layer. The lead patterns of the first internal electrodes and the lead patterns of the second internal electrodes are formed at different positions from each other when seen from a plan view. A plurality of external electrodes are formed at the side faces of the long and short sides of the capacitor body of this multiterminal multilayer ceramic capacitor.

This multiterminal multilayer ceramic capacitor is placed on the surface of a circuit board so that the external electrodes are positioned in a standing direction from the surface of the circuit board. The stacking direction of the internal electrodes and the ceramic layers are substantially vertical to the circuit board. The external electrodes are joined and fixed by soldering to the lands of the circuit pattern of the circuit board so as to mount the capacitor on the surface of the circuit board.

In this type of multilayer ceramic capacitor, however, since the stacking direction of the internal electrodes and the ceramic layers is made to register with the height direction of the capacitor for the surface mounting, if the number of ceramic layers stacked is increased from the electrical characteristics required, the height of the electronic devices cannot be kept low.

Note that as multilayer electronic devices for surface mounting by bringing the stacking direction of the ceramic layers into register with the height direction of the multilayer electronic device, in addition to the one of U.S. Patent No. 5880925, there are many known such as those disclosed in JP-B-64-10927, JP-A-161568, JP-A-7-169649, JP-A-7-169651, JP-A-7-272975, JP-A-8-124800, JP-A-9-148174, JP-U-6-7228, JP-B-62-35257, and JP-B-63-38856. In a multilayer electronic device for surface mounting by bringing the stacking direction of the ceramic layers into register with the height direction of the multilayer electronic device, there is the problem that, if the number of ceramic layers stacked is increased from the electrical characteristics required, it is not possible to keep low the height of the electronic device.

In personal computers and other electronic apparatuses, however, the operating frequency has increased from 500 MHz to 1 GHz. The power supply circuit is required to be a low ESL and low ESR multilayer ceramic capacitor. Further, in view of the increasingly smaller sizes of electronic apparatuses, a multiterminal multilayer ceramic capacitor which keeps the height dimension low, enables reliable surface mounting on a three-dimensional printed circuit board etc., and gives predetermined characteristics has been demanded.

If three-dimensionally mounting a conventional multiterminal multilayer ceramic capacitor on a three-dimensional multilayer printed circuit board etc., however, the circuit pattern formed on the circuit board becomes longer, the detouring of the lands becomes longer, and there is a detrimental effect on the inductance component. In particular, a circuit pattern comprised of lands at upper positions and lands at lower positions becomes longer, the detouring of the lands becomes longer and has a detrimental effect on the inductance component, and generation of noise becomes unavoidable.

Further, if the conventional capacitor is surface mounted near the terminals of a semiconductor etc. to lower the ESL, there is the problem that the effect of the inductance component due to the detouring of the lands cannot be ignored. Further, in a conventional capacitor, as explained above, the height dimension of the capacitor itself cannot be kept low no matter what the number of layers stacked. From this, the conventional capacitor is not suited for three-dimensional mounting.

Note that as shown in JP-A-57-60827. JP-G-2657953, a capacitor in which the stacking direction of the ceramic layers is brought into register with the planar direction of the circuit board on which the multilayer ceramic capacitor is to be surface mounted has been proposed. The capacitors disclosed in these publications, however, has the problems that the capacitors cannot be three-dimensionally mounted and the ESR and/or ESL of the external circuits connected to the capacitors easily become large

EP-A-0 351 343 discloses a multilayer capacitor with external electrodes mutually separated in the same row, so that this capacitor cannot be three-dimensionally mounted, and the ESR and/or ESL of the external circuits connected to the capacitors become large.

JP-09-148174A discloses a capacitor in which the stacking direction of the ceramic layers register with the height direction, i.e. the stacking direction of the ceramic layers is not perpendicular to the height direction. Furthermore, in said known capacitor, the height is obviously longer than the length in the stacking direction.

An object of the present invention is to provide a multilayer ceramic capacitor for three-dimensional mounting suitable for mounting in a personal computer or other electronic apparatus with a high operating frequency as a low ESL and low ESR capacitor, enabling the height dimension to be kept low regardless of the number of ceramic layers, and suitable for mounting on a three-dimensional multilayer printed circuit board.

This object is achieved with the features of the claims.

According to the present invention, it is possible to shorten the height dimension of the capacitor body regardless of the number of ceramic layers stacked. As a result, it is possible to shorten the distance between the external electrodes formed on the top face of the capacitor body and the external electrodes formed on the bottom face and possible to reduce the total inductance due to detouring of the lands even if the capacitor is placed on a multilayer board. Further, the lands formed on the multilayer board can be simplified. Therefore, the capacitor is suited for mounting in personal computers and other electronic apparatuses with high operating frequencies as a low ESL and low ESR capacitor. Further, the capacitor is structured to have a low height dimension and have electrodes on the top and bottom faces of the capacitor, is suitable for mounting buried in a three-dimensional multilayer printed circuit board etc.

These and other objects and features of the present invention will be explained in further detail with reference to the attached drawings, in which:
FIG. 1 is a perspective view of a multiterminal multilayer ceramic capacitor for three-dimensional mounting according to a first embodiment of the present invention in a state showing the internal structure;
FIG. 2 is an explanatory view of the pattern shape of the internal electrodes constituting the multiterminal multilayer ceramic capacitor for three-dimensional mounting according to this embodiment;
FIG. 3 is a perspective view of the appearance including external electrodes of the multiterminal multilayer ceramic capacitor for three-dimensional mounting according to this embodiment; and
FIG. 4 is an explanatory view of a sandwiched mounting structure of a multiterminal multilayer ceramic capacitor for three-dimensional mounting according to this embodiment in a multilayer board;

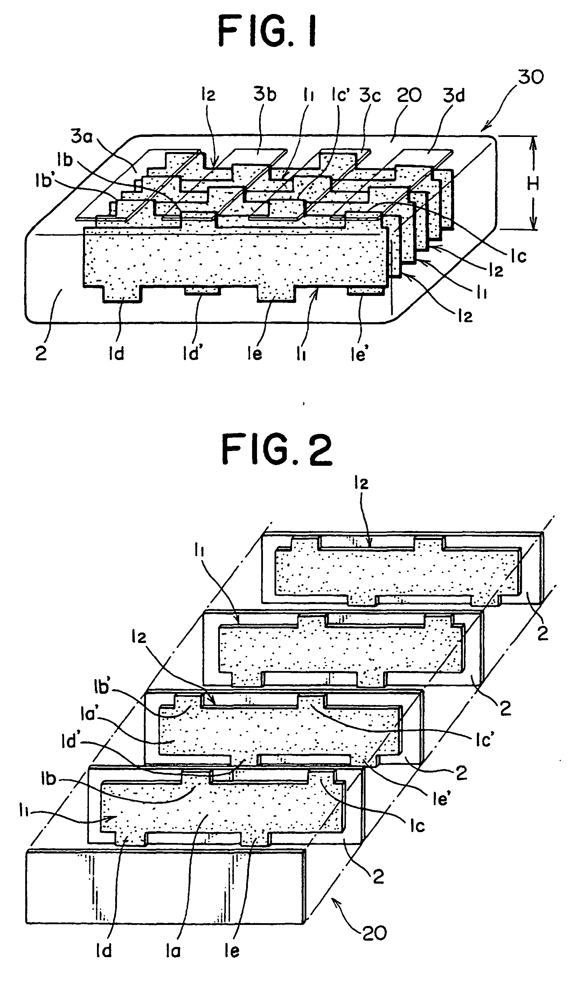

As shown in FIG. 1 to FIG. 3, the multiterminal multilayer ceramic capacitor 30 for three-dimensional mounting according to the present embodiment has a capacitor body 20 of a rectangular parallelepiped shape. The capacitor body 20, as shown in FIG. 2, is comprised of a plurality of first internal electrodes 1₁ and second internal electrodes 1₂ of predetermined patterns alternately stacked in the horizontal direction in the illustration via ceramic layers 2 formed in rectangular shapes. That is, in the present embodiment, as shown in FIG. 1, the plurality of first internal electrodes 1₁ and second internal electrodes 1₂ are stacked in the horizontal direction via ceramic layers 2 so that the short sides of the ceramic layers register with the height H direction of the capacitor body 20. Note that at least one ceramic layer not formed with an internal electrode may be stacked at the two end faces of the body 20 in the stacking direction.

As shown in FIG. 2, each first internal electrode 1₁ has a rectangular first main portion la positioned at the center of a first face (surface) of the ceramic layer 2 and has a plurality of first leads 1b, 1c, 1d, and le extending from the long sides of the first main portion 1a to the long sides of the ceramic layer 2.

Further, each second internal electrode 1₂ has a second main portion 1a' of the same shape facing the first main portion 1a of the first internal electrode across a ceramic layer 2 and located at a rear surface (second face) opposite to the first surface of the ceramic layer 2 and has a plurality of second leads 1b', 1c', 1d', and 1e' extending from the long sides of the second main portion 1a' at positions different from the first leads 1b, 1c, 1d, and 1e to the long sides of the ceramic layer 2.

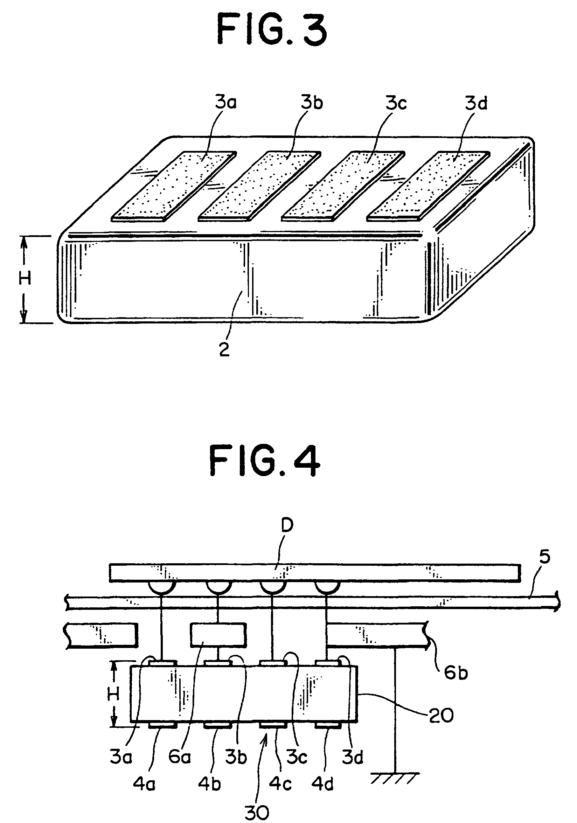

As shown in FIG. 1 and FIG. 4, the top face and bottom face of the capacitor body 20 are formed with first external electrodes 3b, 3d, 4a, and 4c electrically connected to first leads 1b, 1c, 1d, and le positioned in the same line along the stacking direction of the ceramic layers 2.

The top face and bottom face of the capacitor body 20 are formed with second external electrodes 3a, 3c, 4b, and 4d electrically connected to second leads 1b', 1c', 1d', and 1e' positioned in the same line along the stacking direction of the ceramic layers 2.

That is, as shown in FIG. 1 and FIG. 4, the first external electrodes 3b, 3d, 4a, and 4c and the second external electrodes 3a, 3c, 4b, and 4d are arranged at different positions from each other at the outer circumference of the capacitor body 20. Further, the first external electrodes 3b, 3d, 4a, and 4c are connected to first internal electrodes 1₁ of the layers through the first leads 1b to le, while the second external electrodes 3a, 3c, 4b, and 4d are connected to second internal electrodes 1₂ of the layers through the second leads 1b' to 1e'.

These internal electrodes 1₁ and 1₂ are formed by coating and baking an Ni or other conductive paste on the surface of a ceramic green sheet and are comprised of Ni or Ni alloy layers etc. Note that the internal electrodes may also be comprised of the base metal Cu, the precious metal Pd or a Pd-Ag alloy layer etc.

The ceramic layer 2 is comprised of a barium titanate-based, titanium-based, zirconate-based, or other ceramic composition. A stack of the ceramic layers 2 and internal electrodes is formed by coating a ceramic paste on a base film or other film surface to make a green sheet, printing a conductive paste on it, then stacking, cutting, and firing the green sheets. After the production of the body 20, the external electrodes are formed and baked on. The external electrodes 3a to 3d and 4a to 4d specifically can be formed by coating, drying, and baking a Cu paste on the body to form an underlayer, then covering the underlayer with an Ni and Sn plating layer.

The multilayer ceramic capacitor 30 produced in this way is used for three-dimensional mounting of multiple terminals by directly connecting the first external electrodes 3b, 3d, 4a, and 4c and the second external electrodes 3a, 3c, 4b, and 4d to different circuit patterns of the circuit board and supplying voltages of different polarities to the adjoining external electrodes.

The specific dimensions of the multiterminal multilayer ceramic capacitor of the present embodiment are not particularly limited, but for example are a height of 0.5±0.1 mm, a width of 1.6±0.1 mm, and a length (stacking direction) of 3.2±0.1 mm. The thickness of one ceramic layer is not particularly limited, but is for example 4 µm. The shape of the ceramic layer is that of a rectangle of short sides of 0.5±0.1 mm and long sides of 3.2±0.1 mm. The distance between the facing external electrodes positioned at the top and bottom faces of the capacitor body 20 can be set to a length substantially corresponding to the short sides of the ceramic layers 2.

The multiterminal multilayer ceramic capacitor 30 configured in this way can be mounted on a circuit board 5 of a power supply circuit provided with a semiconductor device "D" as shown in FIG. 4. This three-dimensional mounting may be performed in the following way.

That is, one set of the external electrodes 3a, 3b, 3c, and 3d is connected with any terminal of the semiconductor device "D", while the other set of the external electrodes 4a, 4b, 4c, and 4d is made to directly face the different circuit patterns 6a and 6b of the circuit board 5 and electrically connected as + poles/- poles (GND). In the three-dimensional mounting, by keeping the height dimension "H" of the part as a whole low, the detouring of the lands becomes shorter and the effect of the inductance component of the circuit side can be made smaller.

To reduce the inductance of the circuit pattern, by mounting a multilayer ceramic capacitor 30 having an ESL value of 80 to 100 pH and an ESR value of a low 10 mΩ, the inductance component of the lands can be ignored. Due to this, if comparing the ESL and ESR of the multiterminal multilayer ceramic capacitor according to the prior art and the multiterminal multilayer ceramic capacitor according to the present invention having the same electrostatic capacity, the value becomes 8 percent larger in the case of use of the multiterminal multilayer ceramic capacitor according to the prior art, while can be kept a low 2 to 3 percent in the case of use of the multiterminal multilayer ceramic capacitor according to the present embodiment.

This is because in the multiterminal multilayer ceramic capacitor according to the present embodiment, since the distance between facing external electrodes can be set short and the height of the capacitor device as a whole can be reduced, even if the capacitor is mounted on a multilayer board, the total inductance due to the detouring of the lands can be reduced and the lands formed on the multilayer board can be simplified.

## Claims

1. A multilayer ceramic capacitor (30) for three-dimensional mounting comprising:
a ceramic layer (2) formed in a rectangular shape;
a first internal electrode (1₁) having a rectangular first main portion (1a) extending along a longitudinal direction in a first face of the ceramic layer and having a plurality of first leads (1b, 1c, 1d, 1e) extending from long sides of the first main portion to long sides of the ceramic layer;
a second internal electrode (1₂) having a second main portion (1a') opposing against the first main portion (1a) of the first internal electrode (1₁) via said ceramic layer (2) and locating in a second face of the ceramic layer opposite to the first face and having a plurality of second leads (1b', 1c', 1d', 1e') extending from long sides of the second main portion at positions different from the first leads provided at the first internal electrode to the long sides of the ceramic layer;
a rectangular parallelepiped shaped capacitor body (20) having a width, length and height, and comprised of a plurality of first internal electrodes and second internal electrodes stacked via ceramic layers so that the short sides of the ceramic layers register with the height direction H of the capacitor body (20), and the long sides of the ceramic layers register with the width direction;
first external electrodes (3b, 3d, 4a, 4c) formed at a top face and bottom face of said capacitor body (20) and electrically connected to first leads positioned in the same lines along the stacking direction of the ceramic layers; and
second external electrodes (3a, 3c, 4b, 4d) alternately formed with respect to the first external electrodes at the top face and bottom face of the capacitor body (20) and electrically connected to second leads positioned in the same.lines along the stacking direction of the ceramic layers;
the first external electrodes and the second external electrodes are arranged in parallel and next to each other mutually, and voltages of different polarities are suppliable to the adjoining external electrodes;
the stacking direction of the ceramic layers and height direction of the capacitor body (20) are perpendicular,
the length of the capacitor body (20) registering with the stacking direction is longer than the height of the capacitor body;
**characterized in that** the first external electrodes (3b, 3d, 4a, 4c) and the second external electrodes (3a, 3c, 4b, 4d) are formed continuously in the stacking direction of the ceramic layers at the top face and bottom face of said capacitor body (20);

2. The multilayer ceramic capacitor as set forth in claim 1, wherein said first external electrodes (3b, 3d, 4a, 4c) are connectable to a first circuit pattern outside of said capacitor body (20) and said second external electrodes (3a, 3c, 4b, 4d) are connectable to a second circuit pattern different from said first circuit pattern.

3. The multilayer ceramic capacitor as set forth in claim 1 or 2, wherein the multilayer ceramic capacitor is buriable in a three-dimensional circuit board.

## Patentansprüche

1. Vielschicht-Keramikkondensator (30) für eine dreidimensionale Montage, mit:
einer rechteckigen Keramikschicht (2);
einer ersten Innenelektrode (1₁) mit einem rechtekkigen ersten Hauptabschnitt (1a), der sich entlang einer Längsrichtung in einer ersten Fläche der Keramikschicht erstreckt und mehrere erste Anschlußabschnitte (1b, 1c, 1d, 1e) aufweist, die sich von langen Seiten des ersten Hauptabschnitts zu langen Seiten der Keramikschicht erstrecken;
einer zweiten Innenelektrode (1₂) mit einem zweiten Hauptabschnitt (1a'), der dem ersten Hauptabschnitt (1a) der ersten Innenelektrode, getrennt durch die Keramikschicht (2), an einer zweiten, der ersten Fläche gegenüberliegenden Fläche der Keramikschicht gegenüberliegt, und mit mehreren zweiten Anschlußabschnitten (1b', 1c', 1d', 1e'), die sich von den langen Seiten des zweiten Hauptabschnitts zu den langen Seiten der Keramikschicht an Positionen erstrecken, die von den auf der ersten Innenelektrode bereitgestellten ersten Anschlußabschnitten verschieden sind;
einem rechteckigen, parallelepipedförmigen Kondensatorkörper (20) mit einer Breite, einer Länge und einer Höhe, der mehrere erste und zweite Innenelektroden aufweist, die über Keramikschichten stapelförmig angeordnet sind, so dass die kurzen Seiten der Keramikschichten mit der Höhenrichtung H des Kondensatorkörpers (20) und die langen Seiten der Keramikschichten mit der Breitenrichtung ausgerichtet sind;
ersten Außenelektroden (3b, 3d, 4a, 4c), die an einer Oberseite und einer Unterseite des Kondensatorkörpers (20) ausgebildet und mit ersten Anschlußabschnitten elektrisch verbunden sind, die sich entlang der Stapelrichtung der Keramikschichten in den gleichen Reihen erstrecken; und
zweiten Außenelektroden (3a, 3c, 4b, 4d), die an der Oberseite und der Unterseite des Kondensatorkörpers (20) bezüglich den ersten Außenelektroden alternierend ausgebildet und mit zweiten Anschlußabschnitten elektrisch verbunden sind, die sich entlang der Stapelrichtung der Keramikschichten in den gleichen Reihen erstrecken;
wobei die ersten Außenelektroden und die zweiten Außenelektroden parallel und wechselseitig benachbart zueinander angeordnet sind, und wobei den benachbarten Außenelektroden Spannungen mit verschiedener Polarität zugeführt werden können;
wobei die Stapelrichtung der Keramikschichten und die Höhenrichtung des Kondensatorkörpers (20) senkrecht zueinander verlaufen; und
die sich in der Stapelrichtung erstreckende Länge des Kondensatorkörpers (20) größer ist als die Höhe des Kondensatorkörpers;
**dadurch gekennzeichnet, dass**
die ersten Außenelektroden (3b, 3d, 4a, 4c) und die zweiten Außenelektroden (3a, 3c, 4b, 4d) an der Oberseite und der Unterseite des Kondensatorkörpers (20) in der Stapelrichtung der Keramikschichten kontinuierlich ausgebildet sind.

2. Keramikkondensator nach Anspruch 1, wobei die ersten Außenelektroden (3b, 3d, 4a, 4c) mit einem ersten Schaltungsmuster außerhalb des Kondensatorkörpers (20) und die zweiten Außenelektroden (3a, 3c, 4b, 4d) mit einem vom ersten Schaltungsmuster verschiedenen zweiten Schaltungsmuster verbindbar sind.

3. Keramikkondensator nach Anspruch 1 oder 2, wobei der Vielschicht-Keramikdensator in einer dreidimensionalen Leiterplatte versenkbar angeordnet werden kann.

## Revendications

1. Condensateur céramique multicouche (30) pour montage tridimensionnel, comprenant :
une couche de céramique (2) formée en une forme rectangulaire ;
une première électrode interne (1₁) comportant une première partie principale rectangulaire (1a) s'étendant le long d'une direction longitudinale dans une première face de la couche de céramique et comportant une pluralité de premiers conducteurs (1b, 1c, 1d, 1e) s'étendant des grands côtés de la première partie principale aux grands côtés de la couche de céramique ;
une deuxième électrode interne (1₂) comportant une deuxième partie principale (1a') opposée à la première partie principale (1a) de la première électrode interne (1₁) par l'intermédiaire de ladite couche de céramique (2) et située dans une deuxième face de la couche de céramique à l'opposé de la première face et comportant une pluralité de deuxièmes conducteurs (1b', 1c', 1d', le') s'étendant des grands côtés de la deuxième partie principale, à des positions différentes des premiers conducteurs prévus au niveau de la première électrode interne, aux grands côtés de la couche de céramique ;
un corps de condensateur formé en parallélépipède rectangulaire (20) présentant une largeur, une longueur et une hauteur, et composé d'une pluralité de premières électrodes internes et de deuxièmes électrodes internes empilées par l'intermédiaire de couches de céramique de sorte que les petits côtés des couches de céramique coïncident avec la direction de la hauteur H du corps de condensateur (20), et que les grands côtés des couches de céramique coïncident avec la direction de la largeur ;
des premières électrodes externes (3b, 3d, 4a, 4c) formées sur une face supérieure et sur une face inférieure dudit corps de condensateur (20) et électriquement connectées aux premiers conducteurs positionnés sur les mêmes lignes le long de la direction d'empilement des couches de céramique ; et
des deuxièmes électrodes externes (3a, 3c, 4b, 4d) formées en alternance par rapport aux premières électrodes externes sur la face supérieure et sur la face inférieure du corps de condensateur (20) et électriquement connectées aux deuxièmes conducteurs positionnés sur les mêmes lignes le long de la direction d'empilement des couches de céramique,
les premières électrodes externes et les deuxièmes électrodes externes étant agencées en parallèle et côte à côte, et des tensions de différentes polarités pouvant être fournies aux électrodes externes adjacentes ;
la direction d'empilement des couches de céramique et la direction de la hauteur du corps de condensateur (20) étant perpendiculaires,
la longueur du corps de condensateur (20) coïncidant avec la direction d'empilement étant plus longue que la hauteur du corps de condensateur ;
**caractérisé en ce que** les premières électrodes externes (3b, 3d, 4a, 4c) et les deuxièmes électrodes externes (3a, 3c, 4b, 4d) sont formées en continu dans la direction d'empilement des couches de céramique sur la face supérieure et sur la face inférieure dudit corps de condensateur (20).

2. Condensateur céramique multicouche selon la revendication 1, dans lequel lesdites premières électrodes externes (3b, 3d, 4a, 4c) peuvent être connectées à un premier tracé de circuit à l'extérieur dudit corps de condensateur (20) et lesdites deuxièmes électrodes externes (3a, 3c, 4b, 4d) peuvent être connectées à un deuxième tracé de circuit différent dudit premier tracé de circuit.

3. Condensateur céramique multicouche selon la revendication 1 ou 2, dans lequel le condensateur céramique multicouche peut être enterré dans une carte de circuit imprimé tridimensionnelle.
